# EUROPEAN PATENT APPLICATION

(11) **EP 4 276 120 A1**
(43) Date of publication of application: **15.11.2023**
(21) Application number: 21917728.4
(22) Date of filing: 24.12.2021
(51) Int. Cl.: C08F 8/42, C08J 3/20, C08L 1/02, C08L 23/00, C08L 67/02, B29C 70/06

(54) **CELLULOSE FIBER-REINFORCED THERMOPLASTIC RESIN MOLDED BODY AND METHOD FOR PRODUCING SAME**

(30) Priority: 08.01.2021 JP 2021002125
(71) Applicant: FURUKAWA ELECTRIC CO., LTD., Chiyoda-ku Tokyo 100-8322 (JP)
(72) Inventor: IKURA, Yukihiro, Tokyo 100-8322 (JP); SUYAMA, Kenichi, Tokyo 100-8322 (JP); SATAKE, Mayu, Tokyo 100-8322 (JP); HAMURO, Yui, Tokyo 100-8322 (JP); NAKAJIMA, Yasuo, Tokyo 100-8322 (JP)
(74) Representative: Forstmeyer, Dietmar
(86) International application number: PCT/JP2021/048405
(87) International publication number: WO 2022/149508

(57) **Abstract**

A cellulose fiber reinforced thermoplastic resin formed body, containing a thermoplastic resin, a cellulose fiber and an organic fiber different from the cellulose fiber, in which, in the resin formed body, the content of the thermoplastic resin is 39 to 80 mass%, the content of the cellulose fiber is 5 to 55 mass%, and the content of the organic fiber different from the cellulose fiber is 4 to 35 mass%; and
a method of producing the same.

## Description

### FIELD OF THE INVENTION

The present invention relates to a cellulose fiber reinforced thermoplastic resin formed body and a method of producing the same.

### BACKGROUND OF THE INVENTION

A fiber reinforced resin in which a resin is reinforced by reinforcing fibers, such as glass fiber, cellulose fiber, and the like is known.

A cellulose fiber is a natural resource that is contained in all plants and that can be said inexhaustible, and further, when compared with the case of being reinforced by the glass fibers, the resulting fiber reinforced resin is lightweight and allows increasing specific strength (a value of a mechanical strength divided by a density). For these reasons, cellulose fiber reinforced resins have been researched and developed as an alternative technology for a glass fiber reinforced resin, and is expected to be applied to automobile components, structural materials, and the like.

In the field related to automobiles, there is an increasing demand for weight reduction of vehicles, for example, from a standpoint of resource saving and a standpoint of fuel efficiency improvement. Since many cellulose fiber reinforced resin materials are lightweight and have high rigidity (e.g., high flexural modulus) due to the addition of cellulose fibers, they are attracting attention as materials for automobile components and the like that realize weight reduction. For example, as described in Patent Literature 1, it is described that reinforced resin compositions made by homogenizing polypropylene resin with cellulose fibers can be used as materials for automobile components and the like.

### CITATION LIST

### PATENT LITERATURES

Patent Literature 1: WO 2013/099530
Patent Literature 2: Japanese Patent No. 5047414

### SUMMARY OF THE INVENTION

### TECHNICAL PROBLEM

The inventors have examined physical properties of formed bodies obtained from the cellulose fiber reinforced resin materials described in the above-described Patent Literature 1, and have found that blending of the cellulose fibers provides excellent rigidity (flexural modulus) while it is not sufficient in terms of impact resistance, and that there is room for improvement.

As one means for increasing impact strength of resin materials, a technology of adding a rubber component is known. For example, Patent Literature 2 describes a thermoplastic resin composition in which vulcanized acid-modified nitrile rubber is dispersed in shape of particles inside a matrix phase of a thermoplastic resin having an amino group, as a resin composition having improved mechanical strength, such as impact resistance strength, without deteriorating the characteristics of the resin, such as heat resistance.

However, it has been found that a resin formed body obtained by blending the rubber component as a component of the cellulose fiber reinforced resin material has a problem causing a decrease in flexural modulus, although it can increase its impact resistance strength.

The present invention is contemplated to provide a cellulose fiber reinforced thermoplastic resin formed body that realizes excellent impact strength as well as sufficiently high flexural modulus (rigidity). Additionally, the present invention is contemplated to provide a method of producing a cellulose fiber reinforced thermoplastic resin formed body having the above-described excellent property.

### SOLUTION TO PROBLEM

That is, the above-described problems have been solved by the following means.
[1] A cellulose fiber reinforced thermoplastic resin formed body, containing:
   a thermoplastic resin;
   a cellulose fiber; and
   an organic fiber different from the cellulose fiber;
   wherein, in the resin formed body, the content of the thermoplastic resin is 39 to 80 mass%, the content of the cellulose fiber is 5 to 55 mass%, and the content of the organic fiber different from the cellulose fiber is 4 to 35 mass%.
[2] The cellulose fiber reinforced thermoplastic resin formed body described in [1], wherein the organic fiber different from the cellulose fiber contains a polyethylene terephthalate fiber.
[3] The cellulose fiber reinforced thermoplastic resin formed body described in [1] or [2], wherein the thermoplastic resin contains at least one kind of a polypropylene resin and a polystyrene resin.
[4] The cellulose fiber reinforced thermoplastic resin formed body described in [3], wherein the content of an alkoxysilane-modified polypropylene resin with respect to 100 mass parts of the polypropylene resin is 5 to 20 mass parts.
[5] A method of producing the cellulose fiber reinforced thermoplastic resin formed body described in any one of [1] to [4], wherein a set temperature of a device used in preparation and molding of a molten mixture containing the organic fiber different from the cellulose fiber and the thermoplastic resin is set at a temperature not exceeding the [(melting point of the organic fiber) - 20°C].
[6] A cellulose fiber reinforced thermoplastic resin formed body, containing:
   a thermoplastic resin;
   a cellulose fiber; and
   an organic fiber different from the cellulose fiber;
   wherein, in the resin formed body, the content of the thermoplastic resin is 39 to 80 mass%, the content of the cellulose fiber is 5 to 55 mass%, and the content of the organic fiber different from the cellulose fiber is 4 to 35 mass%; and wherein a set temperature of a device used in preparation and molding of a molten mixture containing the organic fiber different from the cellulose fiber and the thermoplastic resin is set at a temperature not exceeding the [(melting point of the organic fiber) - 20°C].

In the description of the present invention, any numerical expressions in a style of "...to..." will be used to indicate a range including the lower and upper limits represented by the numerals given before and after "to", respectively.

### ADVANTAGEOUS EFFECTS OF INVENTION

The cellulose fiber reinforced thermoplastic resin formed body of the present invention is excellent in both high flexural modulus (rigidity) and high impact strength. Additionally, according to the method of producing a cellulose fiber reinforced thermoplastic resin formed body of the present invention, it is possible to provide a cellulose fiber reinforced polypropylene resin formed body having the above-described excellent property.

### DESCRIPTION OF EMBODIMENTS

### [Resin formed body]

The cellulose fiber reinforced thermoplastic resin formed body of the present invention (hereinafter also referred to simply as "resin formed body") contains a thermoplastic resin, a cellulose fiber, and an organic fiber different from the cellulose fiber (also referred to simply as "organic fiber" in the present invention). In other words, the resin formed body of the present invention is a fiber reinforced thermoplastic resin formed body in which both the cellulose fiber and the organic fiber different from the cellulose fiber function as reinforcing fibers.

In the resin formed body of the present invention, by using the cellulose fiber and the organic fiber in combination, the organic fiber do not inhibit fiber reinforcing action (improvement of flexural modulus) of the cellulose fiber, and not only the cellulose fiber does not inhibit the fiber reinforcing action (improvement of impact strength) of the organic fiber, but the cellulose fiber further effectively enhance the fiber reinforcing action of the organic fiber (the combination of the cellulose fiber and the organic fiber generates synergistic effects).

The following describes components of the resin formed body of the present invention

### (1) Cellulose fiber

The cellulose fiber has high strength and high rigidity as compared with the thermoplastic resin. In view of this, the cellulose fiber reinforces the thermoplastic resin and enhances the rigidity (flexural modulus) of the resin formed body.

The cellulose fiber for use in the present invention is a fibrous cellulose. Because of having industrial utilization methods established and being easily available, a plant-derived cellulose fiber is preferred, and a fine plant-derived cellulose fiber (powdered pulp) is particularly preferred.

The pulp is also a raw material for paper and consists primarily of a tracheid which is extracted from a plant. From a chemical viewpoint, a primary constituent of the pulp is a polysaccharide and its primary constituent is cellulose.

The plant-derived cellulose fiber is not particularly limited, and specific examples thereof include a material derived from plant, such as wood, bamboo, hemp, jute, kenaf, agricultural product remains or wastes (for example, straw of wheat or rice plant, corn, stalks of cotton and the like, and sugar cane), cloth, regenerated pulp, waste paper, and wood flour.

In the present invention, although the cellulose fiber may be blended with components other than the cellulose fiber derived from the above-described plants and the like, an amount of such components is small. That is, in the cellulose fiber material blended in the resin formed body of the present invention, the content of the cellulose fiber is 70 mass% or more, preferably 80 mass% or more, and more preferably 90 mass% or more. For example, a resin formed body obtained by blending wood flour itself or the like contains a large amount of lignin or hemicellulose, which makes it difficult to impart a desired mechanical property to the resulting resin formed body. The cellulose fiber used in the present invention is preferably a wood or a material derived from the wood, and particularly preferably a kraft pulp.

Meanwhile, the kraft pulp is a collective term of the pulp in which lignin and hemicellulose have been removed from a wood or plant raw material by a chemical processing with caustic soda or the like, whereby almost pure cellulose has been extracted. The kraft pulp is composed of cellulose molecules as main components, and hemicellulose and lignin.

Generally, the plant-derived cellulose fiber forms a structure in which 30 to 40 molecules are bundled to form an ultra-super narrow and highly crystalline microfibril with a diameter of about 3 nm and a length of several hundreds of nm to several tens of µm and these are bundled via a soft non-crystalline portion. The powdery cellulose (powdered pulp) preferably used as the raw material of the present invention is this bundle-shaped aggregation.

Note that when the cellulose fiber is referred in the present invention, it is used with the meaning that not only the bundle of the above-described microfibrils (non-defiberized state) but also those in the state of the microfibrils generated by being defiberized is included.

An average fiber diameter of the cellulose fiber is not particularly limited and can be appropriately selected according to use application and the like. The average fiber diameter is preferably 1 to 50 µm, and more preferably 5 to 30 µm.

An average fiber length of the cellulose fiber is not particularly limited and can be appropriately selected according to use application and the like. The average fiber length is preferably 10 to 3,000 µm, and more preferably 20 to 2,500 µm.

The above-described average fiber diameter and the average fiber length are obtained by defining the long side of the cellulose fiber observed with an electron microscope as the fiber length and the short side as the fiber diameter and averaging them.

In the present invention, the flexural modulus of the resin formed body means a flexural modulus measured in accordance with JIS K7171 (2016), and the impact strength of the resin formed body means a Charpy impact strength measured in accordance with JIS K7111 (2012), respectively. For more respective details, descriptions can be referred to in the examples described below.

The flexural modulus is preferably 2,000 MPa or more, more preferably 2,100 MPa or more, further preferably 2,300 or more, and particularly preferably 2,500 MPa or more. The upper limit is not particularly limited, but 5,000 MPa or less is practical. Here, the significant figure of the flexural modulus is in the order of one.

Further, the impact strength is preferably 5.0 kJ/m² or more, more preferably 10.0 kJ/m² or more, and further preferably 13.0 kJ/m² or more. The upper limit of the impact strength is not particularly limited in a range where the flexural modulus is greater than or equal to the desired value. This upper limit depends on types of the thermoplastic resin but can be, for example, 30.0 kJ/m² or less. Here, the significant figure of the impact strength is the first decimal place.

### (2) Organic fiber different from cellulose fiber

The organic fiber different from the cellulose fiber reinforces the cellulose fiber reinforced thermoplastic resin formed body and increases the impact resistance (impact strength) of the resin formed body.

For the organic fiber different from the cellulose fiber, a synthetic resin fiber is preferable, although there is no particular limitation as long as it is not the above-described cellulose fiber. Examples of the synthetic resin fiber includes polyester fiber, polyethylene terephthalate fiber, polyethylene naphthalate fiber, polyphenylene sulfide fiber, polyamide fiber, nylon fiber, polyimide fiber, and the like. Among these, those having melting points of organic fibers more than 200°C are preferable, and those more than 220°C are more preferable. Among these, the polyethylene terephthalate fiber is particularly preferable from the aspect of cost and processability. In other words, the above-described organic fiber preferably includes the polyethylene terephthalate fiber, and more preferably is the polyethylene terephthalate fiber.

The shape of the organic fiber is not particularly limited, but can be exemplified such as fiber with a star-shaped cross-section, cylindrical fiber, and elliptical fiber, and appropriately considered according to their purposes. Among these, the cylindrical fiber or the elliptical fiber is preferable from the aspect of formability, and the cylindrical fiber is more preferable.

The short diameter of the cross-section of the organic fiber is preferably 3 to 50 µm, and more preferably 5 to 40 µm. Moreover, the long diameter of the cross-section of the organic fiber is preferably 7.5 to 90 µm, and more preferably 15 to 60 µm. When the short diameter and the long diameter each are the above-described preferable lower limit or more, impregnation of the resin into the organic fiber becomes good. When they each are the above-described preferable upper limit or less, the resin formed body made from the pellet described below can be made with good appearance and mechanical strength.

The ratio of the long diameter to the short diameter ((long diameter)/(short diameter)) is preferably 1.0 to 1.5, and more preferably 1.0 to 1.3. In the case of the cylindrical fiber, the ratio of the long diameter to the short diameter is at least in the range of 1.0 to 1.15, preferably 1.0 to 1.10, while the fiber diameter is preferably 15 µm to 50 µm, and more preferably 18 µm to 35 µm. The short diameter and the long diameter of the cross-section of the organic fiber are average values of values measured on randomly selected 20 fibers using a scanning electron microscope or the like. In the case of the cylindrical fiber, the fiber diameter means a diameter of a perfect circle (perfect circle equivalent diameter) when the cross-sectional area of the fiber is converted into the perfect circle of equal area, as measured by a scanning electron microscope or the like.

The diameter of the above-described organic fiber is the diameter of the organic fiber used as a raw material. The diameter of the organic fiber in the resin formed body of the present invention is substantially the same as the diameter of the organic fiber used as the raw material when the resin formed body is made under the temperature condition which does not melt the organic fiber as in the method of producing described below. In fact, as described in Example 1 below, it can be confirmed that there is almost no difference between the diameter of the organic fiber used as the raw material and the diameter of the organic fiber in the resin formed body.

### (3) Thermoplastic resin

The thermoplastic resin to be used for the resin formed body of the present invention is not particularly limited, and specific examples thereof include a polyolefin resin such as polypropylene resin, polyethylene resin, polyvinyl chloride resin, acrylonitrile styrene copolymer (ABS) resin, and copolymer resin thereof. Further included is a polystyrene resin, which is known to exhibit a property similar to that of the ABS resin.

The above-described thermoplastic resin contains preferably at least one kind of a polyolefin resin and a polystyrene resin, more preferably at least one kind of a polypropylene resin and a polystyrene resin.

As for the above-described thermoplastic resin, as described below in the method for producing the resin formed body, a resin capable of setting the temperature during preparation and forming of the molten mixture containing the organic fiber and the thermoplastic resin less than the melting point of the above-described organic fiber is preferable. For example, a resin capable of setting the processing temperature less than 230°C is preferable, a polypropylene resin or a polystyrene resin is preferable, and the polypropylene resin is more preferable. Thus, a resin such as a polypropylene resin and a polystyrene resin, which is capable of setting the processing temperature less than 230°C, can be preferably used in combination with a polyethylene terephthalate fiber, which has a melting point of about 230°C. In the present invention, the thermoplastic resin is also referred to as a base resin.

### -Polypropylene resin-

The polypropylene resin preferably has at least a part of polypropylene forming a crystalline structure at a normal temperature (25°C) in the resin formed body of the present invention. When the differential scanning calorimetry (DSC measurement) is conducted on the resin formed body containing such a polypropylene resin, the melting peak associated with melting of the polypropylene crystal is observed at 164±5°C.

Specific examples of the polypropylene resin include a propylene homopolymer, a propylene-ethylene random copolymer, a propylene-α-olefin random copolymer, a propylene-ethylene-α-olefin copolymer, and a propylene block copolymer (copolymer that contains a propylene homopolymer component or copolymer component that mainly contains propylene, and a copolymer component obtained by copolymerizing at least one monomer selected from ethylene and α-olefin with propylene). These polypropylene resins may be used singly or two or more kinds thereof may be used in combination. Note that, in the present invention, the resin containing both an ethylene component and a propylene component is classified as the polypropylene resin.

As α-olefin for use in the polypropylene resin, 1-butene, 1-pentene, 1-hexene, 4-methyl-1-pentene, 1-octene, and 1-decene are preferable, and 1-butene, 1-hexene, and 1-octene are more preferable.

Specific examples of the propylene-α-olefin random copolymer include a propylene-1-butene random copolymer, a propylene-1-hexene random copolymer, a propylene-1-octene random copolymer, and the like.

Specific examples of the propylene-ethylene-α-olefin copolymer include a propylene-ethylene-1-butene copolymer, a propylene-ethylene-1-hexene copolymer, a propylene-ethylene-1-octene copolymer, and the like.

Specific examples of the propylene block copolymer include a (propylene)-(propylene-ethylene) copolymer, a (propylene)-(propylene-ethylene-1-butene) copolymer, a (propylene)-(propylene-ethylene-1-hexene) copolymer, a (propylene)-(propylene-1-butene) copolymer, a (propylene)-(propylene-1-hexene) copolymer, a (propylene-ethylene)-(propylene-ethylene) copolymer, a (propylene-ethylene)-(propylene-ethylene-1-butene) copolymer, a (propylene-ethylene)-(propylene-ethylene-1-hexene) copolymer, a (propylene-ethylene)-(propylene-1-butene) copolymer, a (propylene-ethylene)-(propylene-1-hexene) copolymer, a (propylene-1-butene)-(propylene-ethylene) copolymer, a (propylene-1-butene)-(propylene-ethylene-1-butene) copolymer, a (propylene-1-butene)-(propylene-ethylene-1-hexene) copolymer, a (propylene-1-butene)-(propylene-1-butene) copolymer, a (propylene-1-butene)-(propylene-1-hexene) copolymer, and the like.

Among these polypropylene resins, the propylene homopolymer, the propylene-ethylene random copolymer, the propylene-1-butene random copolymer, a propylene-ethylene-1-butene copolymer, and the propylene block copolymer are preferred.

The resin formed body of the present invention may contain an alkoxysilane-modified thermoplastic resin as part of the thermoplastic resin. Containing of the alkoxysilane-modified thermoplastic resin is thought to allow improving the state of dispersion of the cellulose fiber in the base resin. Among the alkoxysilane-modified thermoplastic resin, an alkoxysilane-modified polyolefin resin is preferable, and an alkoxysilane-modified polypropylene resin is more preferable.

When the alkoxysilane-modified thermoplastic resin is used, the content of the alkoxysilane-modified thermoplastic resin in 100 mass parts of the thermoplastic resin in the resin formed body of the present invention is preferably 5 to 20 mass parts. Similarly in the case of the polyolefin resin, the content of the alkoxysilane-modified polyolefin resin in 100 mass parts of the polyolefin resin in the resin formed body of the present invention is preferably 5 to 20 mass parts. Similarly in the case of the polypropylene resin, the content of the alkoxysilane-modified polypropylene resin in 100 mass parts of the polypropylene resin in the resin formed body of the present invention is preferably 5 to 20 mass parts.

Details of the alkoxysilane-modified thermoplastic resin will be described below.

### (4) Other components

In addition to the cellulose fiber, the organic fiber different from the cellulose fiber and the thermoplastic resin mentioned above, the resin formed body of the present invention may contain a resin other than the thermoplastic resins, various conventional additives, and the like to the extent that the effects of the present invention are not impaired.

For example, an elastomer, such as an ethylene-α-olefin copolymer, may be additionally compounded to improve the impact strength of the resin formed body within a range having a desired flexural modulus.

For examples, the resin formed body can appropriately contain other components, such as an antioxidant, a light stabilizer, a radical scavenger, an ultraviolet absorber, a colorant (dye, organic pigment, inorganic pigment), a filler, a slipping agent, a plasticizer, a processing aid such as an acrylic processing aid, a foaming agent, a lubricant such as paraffin wax, a surface treatment agent, a nucleating agent, a releasing agent, a hydrolysis inhibitor, an anti-blocking agent, an antistatic agent, an anticlouding agent, a fungicidal agent, an ion trapping agent, a flame retardant, and a flame retardant aid, within a range that does not impair the above-described objects.

In the resin formed body of the present invention, the content of the thermoplastic resin is 39 to 80 mass%, the content of the cellulose fiber is 5 to 55 mass%, and the content of the organic fiber different from the cellulose fiber is 4 to 35 mass%. The preferred ranges of content of each component are as follows.

The content of the cellulose fiber in the resin formed body of the present invention is preferably 5 to 51 mass%, more preferably 5 to 45 mass%, further preferably 8 to 43 mass%, and particularly preferably 10 to 40 mass%.

The content of the organic fiber different from the cellulose fiber in the resin formed body of the present invention is preferably 5 to 35 mass%, more preferably 7 to 30 mass%, and further preferably 8 to 24 mass%.

The content of the thermoplastic resin in the resin formed body of the present invention is preferably 50 to 80 mass%, more preferably 53 to 78 mass%, and further preferably 55 to 75 mass%.

In the resin formed body of the present invention, the content of the cellulose fiber to 100 mass parts of the thermoplastic resin is preferably 7 to 150 mass parts, more preferably 7 to 100 mass parts, and further preferably 10 to 70 mass parts. As described above, by setting the content of the cellulose fiber in the resin formed body or the content of the cellulose fiber with respect to the thermoplastic resin to the preferable lower limit or more, it becomes easier to achieve a desired flexural modulus, and by setting it to the preferable upper limit or less, it becomes easier to obtain a resin formed body with an excellent appearance and a mechanical strength.

In the resin formed body of the present invention, the content of the organic fiber different from the cellulose fiber to 100 mass parts of the thermoplastic resin is preferably 5 to 100 mass parts, and more preferably 16 to 50.0 mass parts. As described above, by setting the content of the organic fiber different from the cellulose fiber with respect to the resin formed body or the content of the organic fiber different from the cellulose fiber in the thermoplastic resin to the above-described preferable lower limit value or more, it is easier to achieve a desired impact strength, and by setting it to the above-described preferred upper limit value or less, it is easier to obtain a resin formed body with an excellent appearance and a mechanical strength.

The total content of the cellulose fiber, the organic fiber different from the cellulose fiber, and the thermoplastic resin in the resin formed body of the present invention is not particularly limited to the extent that the effects of the present invention can be obtained, but is usually 85 mass% or more, preferably 90 mass% or more, and more preferably 95 mass% or more. There is no limit to the upper limit of the total content, which can also be 100 mass%.

The content of each component of the cellulose fiber, the organic fiber, and the thermoplastic resin in the resin formed body of the present invention can be calculated from the content of each component when blended. Further, the content of each component can be calculated from the resin formed body of the present invention by dissolving the resin by solvent extraction using hot xylene and separating each component by a weight measurement method or by a weight loss curve of a thermogravimetric balance or the like.

### [Method of producing resin formed body]

The resin formed body of the present invention can be obtained by, at least, melt-mixing the thermoplastic resin, the cellulose fiber and the organic fiber different from the cellulose fiber (organic fiber), and molding the obtained molten mixture (cellulose fiber reinforced resin composition). That is, the method of producing the resin formed body of the present invention includes a step of molding the molten mixture including the thermoplastic resin, the cellulose fiber and the organic fiber. By melt-mixing, the cellulose fiber and the organic fiber are dispersed in the thermoplastic resin to obtain the resin formed body of the present invention, in which the cellulose fiber and the organic fiber are reinforcing fibers.

In the present invention, the method of preparing a molten mixture A of the thermoplastic resin and the cellulose fiber and a molten mixture B of the thermoplastic resin and the organic fiber in advance, then melt-mixing them and molding is preferable from the aspect of ensuring good dispersion of the cellulose fiber and the organic fiber in the thermoplastic resin. From the aspect of handleability in the molding step, it is preferable to process the molten mixture A of the thermoplastic resin and the cellulose fiber and the molten mixture B of the thermoplastic resin and the organic fiber into a pellet form as described below.

In the present invention, the term "melt-mixing" means mixing the thermoplastic resin in a molten state with components such as a cellulose fiber and an organic fiber. The cellulose fiber and the organic fiber are preferably mixed in a state of fiber without melting. In addition, the term "mixing" can be done uniformly or non-uniformly as long as the molten thermoplastic resin and components such as a cellulose fiber and an organic fiber can be made in a mixed state, which can be prepared, for example, by mixing the molten thermoplastic resin and components such as a cellulose fiber and an organic fiber with an extruder or the like, or by infiltrating fibers such as a cellulose fiber and an organic fiber into the molten thermoplastic resin with a resin infiltration die or the like.

### -Melt-mixing (preparation of molten mixture) step-

Respective blending amounts of the thermoplastic resin, the cellulose fiber, and the organic fiber in the melt-mixing are adjusted and determined appropriately to be the contents in the resin formed body described above.

While the temperature in the step of the melt-mixing is not specifically limited insofar as the melt-mixing temperature is a temperature of the melting point of the thermoplastic resin or more, and, for example, the melt-mixing temperature can be set to 160°C to 230°C, and more preferably 170°C to 220°C.

In the present invention, when the term "temperature" is simply stated, it means a temperature of the substance itself being heated, and when the term "set temperature" is stated, it means a set temperature of a device.

In the preparing step of the molten mixture containing the organic fiber, from the aspect that the organic fiber is easily dispersed in the thermoplastic resin without being re-dissolved, the temperature of the melt-mixing described above is preferably less than the melting point temperature of the organic fiber, more preferably [the melting point of the organic fiber - 10°C] or less, and further preferably [the melting point of the organic fiber - 20°C] or less. For example, in the case of a polyethylene terephthalate fiber having a melting point of about 230°C, the temperature in the step of the melt-mixing is preferably less than 230°C, more preferably 220°C or less, and further preferably 210°C or less.

Further, in the preparing step of a molten mixture that does not contain any organic fiber but contains the cellulose fiber and the thermoplastic resin, from the aspect of reducing pyrolysis of the cellulose fiber, the melt-mixing temperature is preferably 250°C or less, more preferably 230°C or less, and further preferably 200°C or less.

In performing the melt-mixing step at high temperature not using the organic fiber, the melt-mixing may be performed by adding an additive such as an antioxidant, for example, for the purpose of suppressing a thermal degradation and an oxidative degradation.

The melt-mixing time is not specifically limited, and can be appropriately set.

A device used in the above-described melt-mixing is not specifically limited as long as it can perform the melt-mixing at the melting point of the resin component or higher temperature, and examples of the device includes, for example, a blender, a kneader, a mixing roll, a banbury mixer, a single-screw or twin-screw extruder, and the like, and the twin-screw extruder is preferred.

From the aspect of handleability in a subsequent molding step, the obtained melt-mixed product is preferably processed into a pellet form (hereinafter, the obtained pellet is also simply referred to as a "pellet"). The conditions for pellet processing are not specifically limited, and it can be processed according to a usual method. For example, a method in which, after water cooling the melt-mixed product, the melt-mixed product is processed into a pellet form using a strand cutter or the like is included as an example.

Note that, before the melt-mixing, each of the components may be dry-blended (mixed in advance). The dry-blending is not specifically limited, and can be performed according to a usual method.

### -Molding step-

The method for molding the above-described molten mixture is not specifically limited as long as it is a method that can mold the above-described molten mixture into a desired shape. For example, there are a method for melt compression molding the molten mixture, a method for injection molding the molten mixture, and the like. The molten mixture may be molded into a desired shape after it is processed into a pellet form. In the present invention, it is preferred that, after the molten mixture is processed into a pellet form, it is injection molded, thereby obtaining the formed body.

The molding can be performed simultaneously or continuously with the melt-mixing. That is, examples include an aspect in which the respective components are melt-mixed during the melt molding, for example, during the injection molding, or immediately before it. For example, a sequence of steps of melt-mixing these components in a molding apparatus, subsequently, injecting it to mold into a desired shape can be employed.

In the above-described injection molding, an injection temperature is not specifically limited as long as it is a temperature equal to or more than a melting point of the thermoplastic resin, and, for example, when the polypropylene resin is used, it can be 160°C to 230°C, and preferably 170°C to 200°C.

From the aspect of reducing remelting of the organic fiber, the above-described injection temperature is preferably less than the melting point of the organic fiber, more preferably [the melting point of the organic fiber - 10°C] or less, and further preferably [the melting point of the organic fiber - 20°C] or less. For example, from the aspect of reducing pyrolysis of the cellulose fiber and remelting of the PET fiber, it is preferably less than 230°C, more preferably 220°C or less, and further preferably 210°C or less.

The condition, such as an injection speed, a mold temperature, pressure keeping, and period for the pressure keeping in the above-described injection molding can be appropriately adjusted depending on the purpose.

In the above-described melt compression molding, a melt compression temperature is not specifically limited as long as it is a temperature equal to or more than a melting point of the thermoplastic resin, and for example, when the polypropylene resin is used, it can be 160°C or more and less than 230°C, and preferably 170°C to 210°C.

From the aspect of reducing the remelting of the organic fiber, the melt compression temperature as described above also is preferably less than the melting point of the organic fiber, more preferably [the melting point of the organic fiber - 10°C] or less, and further preferably [the melting point of the organic fiber - 20°C] or less. For example, from the aspect of reducing the pyrolysis of the cellulose fiber and remelting of the PET fiber, it is preferably less than 230°C, more preferably 220°C or less, and further preferably 210°C or less.

The condition such as a preheating time, a pressurization time, and a pressure in the melt compression molding can be appropriately adjusted, depending on the purpose.

The apparatus used in the melt compression molding is not specifically limited, and for example, a pressing machine is included. In addition, for example, a sheeting apparatus using an extruder for sheet molding may be used.

While the shape of the sheet is not specifically limited, for example, the sheet can be processed in a dumbbell shape. The width, the length, the thickness, and the like can be appropriately adjusted such that the stretching is easily performed. For example, the thickness of the sheet is preferably 2 mm or less, and more preferably 1 mm or less.

### -Set temperature of device-

In the method of producing of the present invention, as described above, the resin formed body of the present invention showing desired impact strength and flexural modulus is more surely obtained without causing melting of the organic fiber, and from such aspect, the set temperature of the device used in the preparation and molding of the molten mixture containing the organic fiber and the thermoplastic resin is preferably set at less than [the melting point of the organic fiber - 20°C] (also referred to as "a temperature not exceeding the melting point of the organic fiber - 20°C" in the present invention), more preferably set at [the melting point of the organic fiber - 30°C] or less, and further preferably set at [the melting point of the organic fiber - 40°C] or less. By setting the set temperature of the device described above in this way, it is possible to keep the temperature of the molten mixture inside the device less than the melting point of the organic fiber. The presence of the organic fiber can be confirmed by thermal analysis or the like.

For example, when the polyethylene terephthalate fiber is used as the organic fiber, the set temperature of the above-described device is preferably set at less than 210°C, more preferably set at 200°C or less, and further preferably set at 190°C or less. Further, from the aspect of easily ensuring the flowability of the thermoplastic resin and obtaining good moldability, it is preferable to set the set temperature of the above-described device at 180°C or more.

Further, as for the set temperature of the device used in the preparation and molding of the molten mixture containing the cellulose fiber, it is also preferable to satisfy the set temperature of the device used in the preparation and molding of the molten mixture containing the organic fiber and the thermoplastic resin as described above from the aspect of obtaining the resin formed body with a good appearance.

Specifically, examples of the set temperatures of the devices used in the preparation and molding of the above-described molten mixture include the set temperature of a nozzle, a barrel, a cylinder, and the like to be used to heat the molten mixture.

In the melt-mixing step of the thermoplastic resin and the cellulose fiber, from the aspect of improving the dispersion state of the cellulose fiber in the thermoplastic resin as a base resin, the alkoxysilane-modified thermoplastic resin (preferably alkoxysilane-modified polyolefin resin) and the cellulose fiber are premixed at a temperature less than the melting point of the alkoxysilane-modified thermoplastic resin (preferably alkoxysilane-modified polyolefin resin) before the melt-mixing, or melt-mixed in the presence of a cellulose dispersion aid.

In the case of melt-mixing in the presence of the cellulose dispersion aid, the cellulose dispersion aid can be added to the mixing device (e.g., extruder) and recovered by venting. Water and maleic anhydride are preferred as the cellulose dispersion aid, and water is more preferable in terms of less environmental burden such as separation or recovery, and less adverse impact on cellulose even if it remains.

### -Alkoxysilane-modified thermoplastic resin-

The alkoxysilane-modified thermoplastic resin is not specifically limited as long as it is a thermoplastic resin having an alkoxysilyl group in its main chain or at its end. The alkoxysilane-modified thermoplastic resin may be a resin prepared by modifying a thermoplastic resin with a silane coupling agent having an alkoxysilyl group (an alkoxysilane compound). That is, the alkoxysilane-modified thermoplastic resin can be a resin obtained by the silane coupling agent having the alkoxysilyl group developing a grafting reaction to the thermoplastic resin. The alkoxysilane-modified thermoplastic resin is preferably a graft-modified product of the thermoplastic resin by the silane coupling agent having a group containing an ethylenically unsaturated group and an alkoxysilyl group described later. The alkoxysilane-modified thermoplastic resin can be synthesized by a usual method or a commercial product may be used.

As the alkoxysilane-modified thermoplastic resin, an alkoxysilane-modified polyolefin resin is preferable, and an alkoxysilane-modified polypropylene resin is more preferable. This is also true for the alkoxysilane-modified thermoplastic resin in the subsequent descriptions.

For the thermoplastic resin before the modification used for preparing the above-described alkoxysilane-modified thermoplastic resin, a thermoplastic resin that has a site that can develop a grafting reaction of a silane coupling agent described later and a part that can develop a grafting reaction under a presence of an organic peroxide is preferred. Such sites that can develop a grafting reaction are not specifically limited, but examples include, for example, an unsaturated bond site in a carbon chain and carbon atoms with hydrogen atoms.

For a raw material of the thermoplastic resin used for preparing the above-described alkoxysilane-modified thermoplastic resin, the above-described thermoplastic resin can be used.

The silane coupling agent used for preparing the above-described alkoxysilane-modified thermoplastic resin is preferably an alkoxysilane compound having a functional group for grafting. For the silane coupling agent, an agent that has a site (a group or an atom) that can develop a grafting reaction to the thermoplastic resin under a presence of radicals generated by decomposition of the organic peroxide and an alkoxysilyl group can be used. Examples of the site that can develop a grafting reaction to the thermoplastic resin include a group that contains an ethylenically unsaturated group. Examples of the group containing an ethylenically unsaturated group are not specifically limited, but include, for example, a vinyl group, an allyl group, a (meth)acryloyloxy group, a (meth)acryloyloxy alkylene group, and a p-styryl group. For the alkoxysilyl group, any form of a trialkoxysilyl group, a dialkoxysilyl group, and a monoalkoxysilyl group may be used and it is preferred to use a trialkoxysilane compound. An alkoxy group of the alkoxysilyl group is preferred to have 1 to 6 carbon atoms, and is more preferably a methoxy group and an ethoxy group. For the silane coupling agent, an agent having a group containing an ethylenically unsaturated group and an alkoxysilyl group is preferred. One kind or two or more kinds of the silane coupling agents may be used.

Specific examples of the above-described silane coupling agent include: vinyl silane compounds, such as vinyltrimethoxysilane, vinyltriethoxysilane, vinyltributoxysilane, vinyldimethoxyethoxysilane, vinyldimethoxybutoxysilane, vinyldiethoxybutoxysilane, allyltrimethoxysilane, allyltriethoxysilane, vinyltriacetoxysilane, and trimethoxy(4-vinylphenyl)silane; (meth)acrylic silane compounds, such as 3-(trimethoxysilyl)propyl (meth)acrylate, 3-(methyldimethoxysilyl)propyl (meth)acrylate, 3-(methyldiethoxysilyl)propyl (meth)acrylate, 3-(triethoxysilyl)propyl (meth)acrylate, and 3-(methoxydimethylsilyl)propyl (meth)acrylate; and the like.

Among all, vinyltrimethoxysilane or (trimethoxysilyl)alkyl (meth)acrylate is specifically preferred, and at least one kind of (trimethoxysilyl)alkyl (meth)acrylate and vinyltrimethoxysilane can be used. An alkyl group in the (trimethoxysilyl)alkyl (meth)acrylate is preferred to have 1 to 10 carbon atoms, is more preferred to have 1 to 6 carbon atoms, further preferred to have 2 to 4 carbon atoms, and specifically preferably propyl. From an aspect of enhancing a tensile strength, it is preferred to use 3-(trimethoxysilyl)propyl methacrylate.

For an organic peroxide used for preparing the above-described alkoxysilane-modified thermoplastic resin, a compound that generates radicals at least by pyrolysis can be used. These radicals pull out hydrogen atoms from the thermoplastic resin or the silane coupling agent to generate a radical reaction (a grafting reaction, an addition reaction) between the silane coupling agent and the thermoplastic resin, thereby generating the alkoxysilane-modified thermoplastic resin.

For the organic peroxide, those usually used in a radical polymerization reaction can be widely used. For example, benzoyl peroxide, dicumyl peroxide (DCP), 2,5-dimethyl-2,5-di-(tert-butylperoxy)hexane, or 2,5-dimethyl-2,5-di-(tert-butylperoxy)hexane-3 is preferred. One kind or two or more kinds of the organic peroxides may be used.

A decomposition temperature of the organic peroxide is preferably 80°C to 195°C, and is particularly preferably 125°C to 180°C. In the present invention, the decomposition temperature of the organic peroxide means a temperature (a one-minute half-life temperature) at which, when an organic peroxide of a single composition is heated, the organic peroxide itself is decomposed into two or more kinds of compounds at a certain constant temperature or temperature range in one minute to have half a density (mass). Specifically, it can be obtained by thermal analysis, such as a DSC method.

### -Preparation of alkoxysilane-modified thermoplastic resin-

The alkoxysilane-modified thermoplastic resin can be prepared by causing the silane coupling agent to develop a grafting reaction to the thermoplastic resin in a presence of the radicals generated by the decomposition of the organic peroxide. That is, it can be prepared by melt-mixing the thermoplastic resin and the silane coupling agent in the presence of the organic peroxide at a temperature equal to or more than a decomposition temperature of the organic peroxide.

The raw materials (the thermoplastic resin, the silane coupling agent, and the organic peroxide) used in this preparation are as described above.

The temperature at which the above-described respective components are melt-mixed is equal to or more than the decomposition temperature of the organic peroxide, and preferably a temperature of [decomposition temperature of organic peroxide + 25°C] to [decomposition temperature of organic peroxide + 110°C]. Within the above-described mixing temperature, the above-described components are melted and the organic peroxide is decomposed to generate the radicals, and thus, the necessary grafting reaction sufficiently progresses. Other conditions, for example, a mixing period can be appropriately set considering the efficiency and the purpose.

For the kneader used for the mixing, for example, a single-screw extruder, a twin-screw extruder, a roll, a banbury mixer, or various kinds of kneaders is used.

In the preparation of the alkoxysilane-modified thermoplastic resin, a mixing amount of the silane coupling agent to 100 mass parts of the thermoplastic resin as the raw material is preferably 0.1 to 20 mass parts, and preferably 1 to 5 mass parts.

In the preparation of the alkoxysilane-modified thermoplastic resin, an additive amount of the organic peroxide to 100 mass parts of the thermoplastic resin as the raw material is preferably 0.001 to 10 mass parts, and more preferably 0.1 to 5 mass parts.

The preparation of the alkoxysilane-modified thermoplastic resin can also be performed in the presence of a styrene-based compound. The preparation in the presence of the styrene-based compound can improve the reaction efficiency of a (meth)acrylic acid-based silane coupling agent. Specifically, the styrene-based compound is mixed when the thermoplastic resin and the silane coupling agent are melt-mixed in the presence of the organic peroxide at a temperature equal to or more than the decomposition temperature of the organic peroxide. Specific examples of the styrene-based compounds include a compound represented by the formula H₂C=CH-C₆Hₙ-Rₘ (R designates a substituent that the benzene ring has, where n+m=5), and preferably styrene, 2-methylstyrene, 3-methylstyrene, 4-methylstyrene, and the like. In the preparation of the alkoxysilane-modified thermoplastic resin, the amount of styrene compound added with respect to 100 mass parts of the thermoplastic resin used as a raw material is preferably 0.1 to 20 mass parts, and more preferably 1 to 5 mass parts.

The preparation of the alkoxysilane-modified thermoplastic resin can also be performed simultaneously with the melt-mixing with the thermoplastic resin and the cellulose fiber described above. That is, the thermoplastic resin is molded while a part of it is alkoxysilane-modified and the dealcoholization/dehydration condensation reaction with the cellulose fiber is also developed, and thus, the resin formed body of the present invention can be obtained.

When the resin formed body of the present invention contains the alkoxysilane-modified thermoplastic resin, the resin formed body of the present invention can also be made by melt-mixing with at least any of the thermoplastic resin, the cellulose fiber, and the organic fiber described above, following the preparation of the alkoxysilane-modified thermoplastic resin. A preferred form of the producing method of the present invention is as follows.

A method of producing a cellulose fiber reinforced thermoplastic resin formed body containing a thermoplastic resin, an alkoxysilane-modified thermoplastic resin, a cellulose fiber and an organic fiber, the method of producing the cellulose fiber reinforced thermoplastic resin formed body including the following steps (a) to (d).
(a) A step of mixing a thermoplastic resin and a silane coupling agent in a presence of an organic peroxide at a decomposition temperature or more of the organic peroxide to cause the silane coupling agent to develop a grafting reaction to the thermoplastic resin, thereby preparing an alkoxysilane-modified thermoplastic resin.
(b) A step of melt-mixing the alkoxysilane-modified thermoplastic resin, a cellulose fiber, and an alkoxysilane-unmodified thermoplastic resin so that an amount of the alkoxysilane-modified thermoplastic resin is 5 to 20 mass parts in a total 100 mass parts of the alkoxysilane-modified thermoplastic resin and the alkoxysilane-unmodified thermoplastic resin.
(c) A step of melt-mixing the alkoxysilane-modified thermoplastic resin, an organic fiber, and an alkoxysilane-unmodified thermoplastic resin so that an amount of the alkoxysilane-modified thermoplastic resin is 5 to 20 mass parts in a total 100 mass parts of the alkoxysilane-modified thermoplastic resin and the alkoxysilane-unmodified thermoplastic resin.
(d) A step of mixing a molten mixture obtained in the above-described (b) with a molten mixture obtained in the above described (c) to mold a mixture thereof.

The preparation of the alkoxysilane-modified thermoplastic resin in the step (a) described above is more preferred to be performed in a presence of a styrene compound.

Further, as for the conditions and the like of the steps (b) to (d) other than the preparation of the alkoxysilane-modified thermoplastic resin, descriptions of the method for producing the resin formed body of the present invention shall be referred to.

### [Applications]

The resin formed body of the present invention is excellent in both high flexural modulus and high impact strength. Thus, the resin formed body of the present invention can be used for various applications such as components or materials that require rigidity and impact resistance while possessing the characteristics of lightweight and high specific strength that the cellulose fiber reinforced resin material inherently has. For example, it can be suitably used as a material and the like for automobile components.

The resin formed body of the present invention can be specifically used as a product, a component, and/or a member below. For example, transport equipment (automobile, motorcycle, train, aircraft, and the like), a structural member of a robot arm, a component of an amusement robot, a member of an artificial limb, a material of a home appliance, a housing of OA equipment, information processing equipment, a mobile terminal, a building material, a film for plastic greenhouse, drainage equipment, a material of a toiletry product, various kinds of tanks, a container, a sheet, a packing material, a toy, a writing material, a food product container, a bobbin, a tube, a cable trough, a resin gutter, a furniture material (for example, a wall material and a handrail), a shoe, and sport goods, are included.

The material for the transport equipment includes a vehicle material. The vehicle material includes, for example, interior components, such as trims, such as a dashboard trim, a door trim, and a pillar trim, a meter panel, a meter housing, a glove compartment, a package tray, a roof head lining, a console, an instrumental panel, an arm rest, a seat, a seat back, a trunk lid, a trunk lid lower, a door inner panel, a pillar, a spare tire cover, a door knob, a light housing, and a back tray; exterior components, such as a bumper, a hood, a spoiler, a radiator grille, a fender, a fender liner, a rocker panel, a side step, a door outer panel, a side door, a back door, a roof, a roof carrier, a wheel cap cover, a side-view mirror cover, and an undercover; other components, such as a battery case, an engine cover, a fuel tank, a fuel tube, an oil filler box, an air intake duct, an air cleaner housing, an air conditioner housing, a coolant reservoir tank, a radiator reservoir tank, an window washer tank, an intake manifold, a rotating member, such as a fan and a pulley; a component, such as a wire harness protector; a connection box or a connector, and an integrally molded component, such as a front end module and a front end panel.

### EXAMPLES

The present invention will be described in more detail based on the following Examples and Comparative Examples, but the present invention is not limited thereto.

In the examples and comparative examples below, "parts" means "mass parts" unless otherwise stated.

### -Used Materials-

The following describes the used materials.

### (Cellulose fiber)

ARBOCEL B400 (trade name), manufactured by J. Rettenmaier & Söhne GmbH + Co KG

### (Polypropylene resin)

J106MG (trade name), manufactured by Prime Polymer Co., Ltd.

### (Polystyrene resin)

TOYO STYROL HI H830 (trade name), manufactured by Toyo Styrene Co., Ltd.

### (Elastomer)

DYNARON 1320P (trade name), manufactured by JSR Corporation

### (Polyethylene terephthalate fiber)

The melting point of each of these fibers each are about 230°C.

P100Y BHT 1670T250 (trade name), manufactured by cylindrical fiber, fiber diameter (perfect circle equivalent diameter): 25 µm diameter, manufactured by TEIJIN FRONTIER CO., LTD.

P100L BHT 1670T144 (trade name), manufactured by cylindrical fiber, fiber diameter (perfect circle equivalent diameter): 32 µm diameter, manufactured by TEIJIN FRONTIER CO., LTD.

P100Y BHT 1100T250 (trade name), manufactured by cylindrical fiber, fiber diameter (perfect circle equivalent diameter): 20 µm diameter, manufactured by TEIJIN FRONTIER CO., LTD.

### (Monomer for resin modification)

3-(Trimethoxysilyl)propyl methacrylate, manufactured by Tokyo Chemical Industry Co., Ltd.

### (Reaction aid having vinyl group)

Styrene, manufactured by JUNSEI CHEMICAL CO., LTD.

### (Organic peroxide)

Dicumyl peroxide: PERCUMYL D (trade name), manufactured by NOF CORPORATION, one minute half-life temperature: 175.2°C

### (Example 1)

### -Preparation of cellulose fiber MB (masterbatch) 1-

After a polypropylene resin (PP) as a base resin and a cellulose fiber were thoroughly dried, the polypropylene resin and the cellulose fiber were fed from two hoppers into a co-rotation twin screw extruder (product name: KZW15TW-45MG-NH, manufactured by TECHNOVEL CORPORATION) with a screw diameter of 15 mm and LID = 45, respectively, and extruded into a strand form with a strand die being set at 190°C. The above-described mixing was performed by adjusting 25 mass parts of the cellulose fiber to be mixed to 75 mass parts of the polypropylene resin. A cellulose fiber MB1 in a pellet form was obtained through cooling and cutting.

### -Preparation of polyethylene terephthalate fiber MB1 (PET fiber MB1)-

The polypropylene resin as the base resin was fed into a 40 mm single screw extruder at a set temperature of 200°C in each part of the extruder, a polyethylene terephthalate fiber (PET fiber, P100Y BHT 1670T250) having 25 µm in diameter was continuously fed from a roving stand at a top of the extruder die and continuously fed into the die for resin impregnation, and the PET fiber was coated with the base resin to obtain a strand of a PET fiber reinforced polypropylene resin. The strand was cooled in a cooling water bath and pelletized in a pelletizer to approximately 1 cm in length to obtain a PET fiber MB1. This PET fiber MB1 contains 40 mass parts of the polyethylene terephthalate fiber with respect to 60 mass parts of the polypropylene resin. In the preparation of the PET fiber MB1, the temperature of the PP resin at the feeding point of the PET fiber is reduced to less than 220°C.

### -Molding-

The cellulose fiber MB1, the PET fiber MB1, and the polypropylene resin (in Examples 2 to 11 and 13 and Comparative Examples 1 to 13 described later, polypropylene resins are added as necessary) were dry-blended so as to be 10 mass parts of the cellulose fiber and 18 mass parts of the PET fiber with respect to 72 mass parts of the polypropylene resin, then submitted to an injection molding machine (product name: ROBOSHOT α-S30iA, manufactured by Fanuc Corporation), and obtained multipurpose specimens and strip-shaped specimens (both are injection molding type resin formed bodies) as described in JIS K7139 (2009) under the condition of the barrel/nozzle set temperature of 190°C and the mold temperature of 40°C.

Cross sections of the strip-shaped specimens made in this way were polished, and the cross sections were observed using a scanning electron microscope (manufactured by JEOL Ltd., product name: JSM-6390LV). 20 PET fibers in the samples were randomly selected, long diameters and short diameters were measured to take respective average values, and the long diameter was 25.7 µm while the short diameter was 23.0 µm, which indicated that fiber diameters of the PET fibers used as the raw material were almost maintained.

### (Example 2)

A resin molding body of Example 2 was obtained in a similar way to Example 1 except that, in the dry blending in Example 1, the blending amount of the PET fiber was changed from 18 mass parts to 24 mass parts, and the blending amount of the polypropylene resin was changed from 72 mass parts to 66 mass parts.

### (Example 3)

A resin molding body of Example 3 was obtained in a similar way to Example 1 except that, in the dry blending in Example 1, the blending amount of the cellulose fiber was changed from 10 mass parts to 17.5 mass parts, the blending amount of the PET fiber was changed from 18 mass parts to 12 mass parts, and the blending amount of the polypropylene resin was changed from 72 mass parts to 70.5 mass parts.

### (Example 4)

A resin molding body of Example 4 was obtained in a similar way to Example 1 except that, in the dry blending in Example 1, the blending amount of the cellulose fiber was changed from 10 mass parts to 20 mass parts, the blending amount of the PET fiber was changed from 18 mass parts to 6 mass parts, and the blending amount of the polypropylene resin was changed from 72 mass parts to 74 mass parts.

### (Example 5)

### -Preparation of Modified Resin-

An alkoxysilane-modified polypropylene resin (modified resin) was prepared as follows using a polypropylene resin (PP) with 3-(trimethoxysilyl)propyl methacrylate as a silane coupling agent and styrene as a reaction aid.

The polypropylene resin was put to a co-rotation twin screw extruder (product name: KZW15TW-45MG-NH, manufactured by TECHNOVEL CORPORATION) with a screw diameter of 15 mm and LID = 45, a mixed solution of the 3-(trimethoxysilyl)propyl methacrylate (SiMA), the styrene, and dicumyl peroxide was dripped with a syringe at a constant speed and mixed from a vent part for liquid addition provided in the middle of a barrel, and was extruded into a strand form with a strand die being set at 190°C. The above-described mixing was performed by adjusting 5 mass parts of the 3-(trimethoxysilyl)propyl methacrylate (SiMA), 3.75 mass parts of the styrene, and 0.2 mass part of the dicumyl peroxide to be mixed to 100 mass parts of the polypropylene resin. A polypropylene resin modified with the 3-(trimethoxysilyl)propyl methacrylate (SiMA-PP) in a pellet form was obtained through cooling and cutting.

A resin molding body of Example 5 was obtained in a similar way to Example 1 except that, in the dry blending in Example 1, the blending amount of the cellulose fiber was changed from 10 mass parts to 15.75 mass parts, the blending amount of the PET fiber was changed from 18 mass parts to 12 mass parts, the blending amount of the polypropylene resin was changed from 72 mass parts to a mixture of 67.25 mass parts of the polypropylene resin and 5 mass parts of the SiMA-PP resin (modified resin), and the modified resin was added in the dry blending step.

### (Example 6)

### -Preparation of cellulose fiber MB2-

After a polypropylene resin (PP) as a base resin and a cellulose fiber were thoroughly dried, the polypropylene resin and the cellulose fiber were fed from two hoppers into a co-rotation twin screw extruder (product name: KZW15TW-45MG-NH, manufactured by TECHNOVEL CORPORATION) with a screw diameter of 15 mm and LID = 45, respectively, and extruded into a strand form with a strand die being set at 190°C. The above-described mixing was performed by adjusting 50 mass parts of the cellulose fiber to be mixed to 50 mass parts of the polypropylene resin. A cellulose fiber MB2 in a pellet form was obtained through cooling and cutting.

A resin molding body of Example 6 was obtained in a similar way to Example 1 except that the cellulose fiber MB1 was changed to a cellulose fiber MB2 in Example 1, and, in the dry blending in Example 1, the blending amount of the cellulose fiber was changed from 10 mass parts to 30 mass parts, the blending amount of the PET fiber was changed from 18 mass parts to 12 mass parts, and the blending amount of the polypropylene resin was changed from 72 mass parts to 58 mass parts.

### (Example 7)

A resin molding body of Example 7 was obtained in a similar way to Example 6 except that, in the dry blending in Example 6, the blending amount of the cellulose fiber was changed from 30 mass parts to 25 mass parts, the blending amount of the PET fiber was changed from 12 mass parts to 20 mass parts, and the blending amount of the polypropylene resin was changed from 58 mass parts to 55 mass parts.

### (Example 8)

A resin molding body of Example 8 was obtained in a similar way to Example 6 except that, in the dry blending in Example 6, the blending amount of the cellulose fiber was changed from 30 mass parts to 5 mass parts, the blending amount of the PET fiber was changed from 12 mass parts to 32 mass parts, and the blending amount of the polypropylene resin was changed from 58 mass parts to 63 mass parts.

### (Example 9)

A resin molding body of Example 9 was obtained in a similar way to Example 6 except that, in the dry blending in Example 6, the blending amount of the cellulose fiber was changed from 30 mass parts to 40 mass parts, the blending amount of the PET fiber was changed from 12 mass parts to 8 mass parts, and the blending amount of the polypropylene resin was changed from 58 mass parts to 52 mass parts.

### (Example 10)

A resin formed body of a resin of Example 10 was obtained in a similar way to Example 9 except that the PET fiber used in Example 9 was changed to P100L BHT 1670T144.

### (Example 11)

A resin formed body of a resin of Example 11 was obtained in a similar way to Example 9 except that the PET fiber used in Example 9 was changed to P100Y BHT 1100T250.

### (Example 12)

### -Preparation of cellulose fiber MB3-

After a polypropylene resin (PP) as a base resin and a cellulose fiber were thoroughly dried, the polypropylene resin and the cellulose fiber were fed from two hoppers into a co-rotation twin screw extruder (product name: KZW15TW-45MG-NH, manufactured by TECHNOVEL CORPORATION) with a screw diameter of 15 mm and LID = 45, respectively, and extruded into a strand form with a strand die being set at 190°C. The above-described mixing was performed by adjusting 64 mass parts of the cellulose fiber to be mixed to 36 mass parts of the polypropylene resin. A cellulose fiber MB3 in a pellet form was obtained through cooling and cutting.

### -Molding-

The cellulose fiber MB3, the PET fiber MB1, and the polypropylene resin were dry-blended so as to be 51 mass parts of the cellulose fiber and 8 mass parts of the PET fiber with respect to 41 mass parts of the polypropylene resin, then submitted to an injection molding machine (product name: ROBOSHOT α-S30iA, manufactured by Fanuc Corporation), and obtained multipurpose specimens and strip-shaped specimens (both are injection molding type resin formed bodies) as described in JIS K7139 (2009) under the condition of the barrel/nozzle set temperature of 190°C and the mold temperature of 40°C.

### (Comparative Example 1)

A resin formed body of Comparative Example 1 was obtained in a similar way to Example 1 without adding the cellulose fiber MB1 and the PET fiber MB1 and only using the polypropylene resin in Example 1.

### (Comparative Example 2)

A resin formed body of Comparative Example 2 was obtained in a similar way to Example 4 except that, in Example 4, the cellulose fiber MB1 was not added and the blending amount of the polypropylene resin in the dry blend was changed from 74 mass parts to 94 mass parts.

### (Comparative Example 3)

A resin formed body of Comparative Example 3 was obtained in a similar way to Example 3 except that, in Example 3, the cellulose fiber MB1 was not added and the blending amount of the polypropylene resin in the dry blend was changed from 70.5 mass parts to 88 mass parts.

### (Comparative Example 4)

A resin formed body of Comparative Example 4 was obtained in a similar way to Example 5 except that, in Example 5, the cellulose fiber MB1 was not added and the blending amount of the polypropylene resin in the dry blend was changed from 67.25 mass parts to 83 mass parts.

### (Comparative Example 5)

A resin formed body of Comparative Example 5 was obtained in a similar way to Example 1 except that, in Example 1, the PET fiber MB1 was not added and the blending amount of the polypropylene resin in the dry blend was changed from 72 mass parts to 90 mass parts.

### (Comparative Example 6)

A resin formed body of Comparative Example 6 was obtained in a similar way to Example 4 except that, in Example 4, the PET fiber MB1 was not added and the blending amount of the polypropylene resin in the dry blend was changed from 74 mass parts to 80 mass parts.

### (Comparative Example 7)

A resin formed body of Comparative Example 7 was obtained in a similar way to Example 5 except that, in Example 5, the PET fiber MB1 was not added and 72.25 mass parts of the base resin (resin mixture) in the dry blend was changed to 84.25 mass parts of the polypropylene resin.

### (Comparative Example 8)

A resin formed body of Comparative Example 8 was obtained in a similar way to Example 6 except that, in Example 6, the PET fiber MB1 was not added and the blending amount of the polypropylene resin in the dry blend was changed from 58 mass parts to 70 mass parts.

### (Comparative Example 9)

Without adding the PET fiber MB1, the cellulose fiber MB1 and the elastomer were fed from the two hoppers into the co-rotation twin screw extruder (product name: KZW15TW-45MG-NH, manufactured by TECHNOVEL CORPORATION) with a screw diameter of 15 mm and LID = 45, respectively, and extruded into a strand form with a strand die being set at 190°C. The above-described mixing was performed by adjusting so that the mixing was performed at a blending ratio of 60 mass parts of the polypropylene resin, 20 mass parts of the elastomer, and 20 mass parts of the cellulose fiber. A cellulose fiber MB in a pellet form was obtained through cooling and cutting. A subsequent molding step was performed in a similar way to Example 1 to obtain a resin formed body of Comparative Example 9.

### (Comparative Example 10)

A resin molding body of Comparative Example 10 was obtained in a similar way to Example 5 except that, in Example 5, the PET fiber MB1 was not added, the added amount of the PET fiber MB1 was changed to a polypropylene resin, and the blending amount of the polypropylene resin in the dry blend was changed to 79.25 mass parts.

### (Comparative Example 11)

A resin formed body of Comparative Example 11 was obtained in a similar way to Example 1 except that, in Example 1, 10 parts of wood flour (coniferous wood flour: wood flour made by grinding cedar material with an average particle diameter of 100 am) was used instead of 10 parts of the cellulose fiber.

### (Comparative Example 12)

A resin formed body of Comparative Example 12 was obtained in a similar way to Example 12 except that, in Example 12, the PET fiber MB1 was not added and the blending amount of the polypropylene resin in the dry blend was changed from 41 mass parts to 49 mass parts.

### (Example 13)

### -Preparation of cellulose fiber MB4-

After a polystyrene resin (PS) as a base resin and a cellulose fiber were thoroughly dried, the polystyrene resin and the cellulose fiber were fed from two hoppers into a co-rotation twin screw extruder (product name: KZW15TW-45MG-NH, manufactured by TECHNOVEL CORPORATION) with a screw diameter of 15 mm and LID = 45, respectively, and extruded into a strand form with a strand die being set at 200°C. The above-described mixing was performed by adjusting 25 mass parts of the cellulose fiber to be mixed to 75 mass parts of the polystyrene resin. A cellulose fiber MB4 in a pellet form was obtained through cooling and cutting.

### -Molding-

The cellulose fiber MB4 and the PET fiber MB1 were dry-blended so as to be 20 mass parts of the cellulose fiber, 12 mass parts of the polypropylene resin and 8 mass parts of the PET fiber with respect to 60 mass parts of the polystyrene resin, then submitted to an injection molding machine (product name: ROBOSHOT α-S30iA, manufactured by Fanuc Corporation), and obtained multipurpose specimens and strip-shaped specimens (both are injection molding type resin formed bodies) as described in JIS K7139 (2009) under the condition of the barrel/nozzle set temperature of 200°C and the mold temperature of 40°C.

### (Comparative Example 13)

A resin formed body of Comparative Example 13 was obtained in a similar way to Example 13 without adding the cellulose fiber MB4 and the PET fiber MB1 and only using 87 mass parts of the polystyrene resin and 13 mass parts of the polypropylene resin in Example 13.

The multipurpose test specimens and strip-shaped specimens of the obtained resin formed bodies were subject to the following tests, and the results are shown in Table 1.

### (Evaluation method of flexural modulus)

The flexural modulus was evaluated as an index of rigidity.

The flexural modulus (MPa) of the multipurpose test specimens prepared above was measured under the condition of test speed: 2 mm/min by a universal testing machine (manufactured by Shimadzu Corporation, product name: Autograph AGS-X) in accordance with JIS K7171 (2016).

The specimens having the flexural modulus of 2,000 MPa or more were regarded as passed in the present invention.

### (Evaluation method of impact resistance)

Charpy impact strength (impact strength) was evaluated as an index of impact resistance.

As the impact resistance of the strip-shaped specimens prepared above, the notched Charpy impact strength was measured by an impact tester (manufactured by Toyo Seiki Co., Ltd., IT type) in accordance with JIS K7111 (2012).

The specimens having the impact strength of 5.0 kJ/m² or more were regarded as passed in the present invention.

### {Table 1-1}

**Table 1**

| | | | | Ex. 1 | Ex. 2 | Ex. 3 | Ex. 4 | Ex. 5 | | | Ex. 6 | Ex. 7 | Ex. 8 | Ex. 9 |
|---|---|---|---|---|---|---|---|---|---|---|---|---|---|---|
| Kind of base resin | | | | PP | PP | PP | PP | PP+ Modified PP | | | PP | PP | PP | PP |
| Content of base resin [mass %] | | | | 72 | 66 | 70.5 | 74 | 72.25 | | | 58 | 55 | 63 | 52 |
| Content of cellulose fiber [mass %] | | | | 10 | 10 | 17.5 | 20 | 15.75 | | | 30 | 25 | 5 | 40 |
| Content of PET fiber [mass %] | | | | 18 | 24 | 12 | 6 | 12 | | | 12 | 20 | 32 | 8 |
| flexural modulus [MPa] | | | | 2115 | 2712 | 2542 | 2597 | 2593 | | | 3543 | 2974 | 2008 | 4003 |
| Impact strength [kJ/m²] | | | | 18.1 | 22.5 | 16.6 | 10.1 | 14.9 | | | 15.3 | 19.8 | 25.9 | 11.6 |

| | CEx. 1 | CEx. 2 | CEx. 3 | CEx. 4 | | CEx. 5 | CEx. 6 | CEx. 7 | CEx. 8 | CEx. 9 | | CEx. 10 | CEx. 11 | |
|---|---|---|---|---|---|---|---|---|---|---|---|---|---|---|
| Kind of base resin | PP | PP | PP | PP+ Modified PP | | PP | PP | PP | PP | PP+ Elastomer | | PP+ Modified PP | PP | |
| Content of base resin [mass %] | 100 | 94 | 88 | 88 | | 90 | 80 | 84.25 | 70 | 80 | | 84.25 | 72 | |
| Content of cellulose fiber [mass %] | 0 | 0 | 0 | 0 | | 10 | 20 | 15.75 | 30 | 20 | | 15.75 | 10 (wood flour) | |
| Content of PET fiber [mass %] | 0 | 6 | 12 | 12 | | 0 | 0 | 0 | 0 | 0 | | 0 | 18 | |
| flexural modulus [MPa] | 1870 | 1717 | 1896 | 1782 | | 2289 | 2450 | 2368 | 3537 | 1013 | | 2580 | 1805 | |
| impact strength [kJ/m²] | 2.1 | 5.9 | 12.2 | 10.4 | | 2.1 | 2.2 | 2.1 | 3.8 | 6.7 | | 2.1 | 10.1 | |

| | | | | | | | | | | | | | | |
|---|---|---|---|---|---|---|---|---|---|---|---|---|---|---|
| Remarks: 'Ex.' means Example according to this invention. Remarks: 'CEx.' means Comparative Example. | | | | | | | | | | | | | | |

**{Table 1-2}**

| Continued in Table 1 | | | | | | |
|---|---|---|---|---|---|---|
| | Ex. 10 | Ex. 11 | Ex. 12 | CEx. 12 | Ex. 13 | CEx. 13 |
| Kind of base resin | PP | PP | PP | PP | PS+PP | PS+PP |
| Content of polystyrene resin [mass %] | 0 | 0 | 0 | 0 | 60 | 87 |
| Content of polypropylene resin [mass %] | 52 | 52 | 41 | 49 | 12 | 13 |
| Content of cellulose fiber [mass %] | 40 | 40 | 51 | 51 | 20 | 0 |
| Content of PET fiber [mass %] | 8 | 8 | 8 | 0 | 8 | 0 |
| flexural modulus [MPa] | 4060 | 4050 | 4632 | 4856 | 3119 | 1641 |
| Impact strength [kJ/m²] | 15.5 | 16.3 | 14.5 | 2.5 | 10.0 | 2.4 |

| | | | | | | |
|---|---|---|---|---|---|---|
| Remarks: Ex. means Example according to this invention, and 'CEx.' means Comparative Example. | | | | | | |

The results in Table 1 indicate the following:
The resin formed body of Comparative Example 1 contains neither cellulose fiber nor PET fiber. This resin formed body of Comparative Example 1 was inferior in both flexural modulus and impact strength.

In contrast, the cellulose fiber reinforced thermoplastic resin formed bodies of Comparative Examples 5 to 8, 10, and 12 in which the cellulose fibers are blended do not contain any PET fiber. These cellulose fiber reinforced thermoplastic resin formed bodies of Comparative Examples 5 to 8, 10, and 12 had high flexural moduli, but their impact strengths were still low. Further, the cellulose fiber reinforced thermoplastic resin formed body of Comparative Example 9 is a resin formed body made by blending a hydrogenated styrene butadiene rubber (hydrogenated HSBR) as an elastomer commonly used to improve an impact strength to the cellulose fiber reinforced thermoplastic resin formed body of Comparative Example 6. However, the cellulose fiber reinforced thermoplastic resin formed body of Comparative Example 9 had a slightly improved impact strength, but its flexural modulus was inferior to that of the cellulose fiber reinforced thermoplastic resin formed body of Comparative Example 6, since the flexural modulus was reduced to half or less. It is believed that the addition of the elastomer softened the resin formed body itself, which resulted in that no effect of improving the flexural modulus by adding the cellulose fiber was obtained. Even if an elastomer was vulcanized in the resin, as described in Patent Literature 2, it is believed that the flexural modulus would be similarly reduced and that the flexural modulus would be inferior.

Further, the PET fiber reinforced thermoplastic resin formed bodies of Comparative Examples 2 to 4 in which the PET fibers are blended do not contain any cellulose fiber. These PET fiber reinforced thermoplastic resin formed bodies of Comparative Examples 2 to 4 had improved impact strengths, but their flexural moduli were low. The PET fiber reinforced thermoplastic resin formed body of Comparative Example 11 in which the PET fiber and the wood powder are blended does not contain any cellulose fiber material specified in the present invention. This PET fiber reinforced thermoplastic resin formed body of Comparative Example 11 had an improved impact strength, but its flexural modulus was low.

In contrast to these comparative examples, the cellulose fiber reinforced thermoplastic resin formed bodies of Examples 1 to 12 each contain both the cellulose fiber and the PET fiber. These cellulose fiber reinforced thermoplastic resin formed bodies of Examples 1 to 12 each had a high flexural modulus of 2,000 MPa or higher, a high impact strength of 10 kJ/m² or higher, and excellent rigidity (flexural modulus) and impact resistance. More specifically, it has been found that, by using the cellulose fiber and the organic fiber in combination, the organic fiber does not inhibit a fiber reinforcing action of the cellulose fiber (improvement of the flexural modulus), that the cellulose fiber does not inhibit a fiber reinforcing action of the organic fiber (improvement of impact strength), and that the cellulose fiber further effectively enhances the fiber reinforcing action of the organic fiber (synergistic effect is achieved by using the cellulose fiber and the organic fiber in combination) (e.g., Example 5 compared to Comparative Examples 4 and 10, Example 4 compared to Comparative Examples 2 and 6, and Example 6 compared to Comparative Examples 3 and 8).

In a similar way to the cellulose fiber reinforced thermoplastic resin formed body using the polypropylene resin as a base resin described above, when the polystyrene resin was used as a base resin, the cellulose fiber reinforced thermoplastic resin formed body containing both the cellulose fiber and the PET fiber had a high flexural modulus of 2,000 MPa or more, a high impact strength of 10 kJ/m² or more, and excellent rigidity (flexural modulus) and impact resistance (Example 13 compared to Comparative Example 13).

The results of the examples and the comparative examples described above simply confirm that a cellulose fiber reinforced thermoplastic resin formed body using a thermoplastic resin represented by a polypropylene resin and a polystyrene resin exhibits unique mechanical properties when an organic fiber is used in combination.

Having described our invention as related to the present embodiments, it is our intention that the invention not be limited by any of the details of the description, unless otherwise specified, but rather be construed broadly within its spirit and scope as set out in the accompanying claims.

The present application claims priority of Patent Application No. 2021-002125, filed in Japan on January 8, 2021, which is herein incorporated by reference as part of the present specification.

## Claims

1. A cellulose fiber reinforced thermoplastic resin formed body, comprising:
a thermoplastic resin;
a cellulose fiber; and
an organic fiber different from the cellulose fiber;
wherein, in the resin formed body, the content of the thermoplastic resin is 39 to 80 mass%, the content of the cellulose fiber is 5 to 55 mass%, and the content of the organic fiber different from the cellulose fiber is 4 to 35 mass%.

2. The cellulose fiber reinforced thermoplastic resin formed body according to Claim 1, wherein the organic fiber different from the cellulose fiber comprises a polyethylene terephthalate fiber.

3. The cellulose fiber reinforced thermoplastic resin formed body according to Claim 1 or 2, wherein the thermoplastic resin comprises at least one kind of a polypropylene resin and a polystyrene resin.

4. The cellulose fiber reinforced thermoplastic resin formed body according to Claim 3, wherein the content of an alkoxysilane-modified polypropylene resin with respect to 100 mass parts of the polypropylene resin is 5 to 20 mass parts.

5. A method of producing the cellulose fiber reinforced thermoplastic resin formed body according to any one of Claims 1 to 4, wherein a set temperature of a device used in preparation and molding of a molten mixture containing the organic fiber different from the cellulose fiber and the thermoplastic resin is set at a temperature not exceeding the [(melting point of the organic fiber) - 20°C].

6. A cellulose fiber reinforced thermoplastic resin formed body, comprising:
a thermoplastic resin;
a cellulose fiber; and
an organic fiber different from the cellulose fiber;
wherein, in the resin formed body, the content of the thermoplastic resin is 39 to 80 mass%, the content of the cellulose fiber is 5 to 55 mass%, and the content of the organic fiber different from the cellulose fiber is 4 to 35 mass%; and
wherein a set temperature of a device used in preparation and molding of a molten mixture containing the organic fiber different from the cellulose fiber and
the thermoplastic resin is set at a temperature not exceeding the [(melting point of the organic fiber) - 20°C].
